# EUROPÄISCHE PATENTSCHRIFT

(11) **EP 2 976 556 B1**
(45) Veröffentlichungstag und Bekanntmachung des Hinweises auf die Patenterteilung: **27.03.2019**
(21) Anmeldenummer: 14705153.6
(22) Anmeldetag: 18.02.2014
(51) Int. Cl.: F16H 61/421, F16H 61/431, F16H 47/04

(54) **GETRIEBEVORRICHTUNG MIT SEKUNDÄR GEKOPPELTER LEISTUNGSVERZWEIGUNG**
GEARING DEVICE WITH SECONDARILY COUPLED POWER SPLIT
DISPOSITIF DE TRANSMISSION AVEC DÉRIVATION DE PUISSANCE À COUPLAGE SECONDAIRE

(30) Priorität: 19.03.2013 DE 102013204747
(43) Veröffentlichungstag der Anmeldung: 27.01.2016
(73) Patentinhaber: ZF Friedrichshafen AG, 88046 Friedrichshafen (DE)
(72) Erfinder: LEGNER, Juergen, 88048 Friedrichshafen (DE)
(86) Internationale Anmeldenummer: PCT/EP2014/053051
(87) Internationale Veröffentlichungsnummer: WO 2014/146839

(56) Entgegenhaltungen:
- WO-A1-2009/047036
- WO-A1-2012/006492
- DE-A1- 2 335 629
- DE-A1- 19 801 766
- DE-A1-102007 018 999
- DE-A1-102007 047 194
- GB-A- 924 185
- GB-A- 1 161 508
- US-A- 5 803 856

## Beschreibung

Die Erfindung betrifft eine Getriebevorrichtung mit sekundär gekoppelter Leistungsverzweigung gemäß der im Oberbegriff des Patentanspruches 1 näher definierten Art.

Leistungsverzweigungsgetriebe sind üblicherweise mit einem hydrostatischen Zweig und einem mechanischen Zweig ausgebildet, welche über ein Summierungsgetriebe summiert werden. Derartige Leistungsverzweigungsgetriebe sind beispielsweise aus der DE 10 2007 047 194 A1 und der DE 10 2008 001 613 A1 bekannt, werden auch als CVT-Getriebeeinrichtungen (Continuously-Variable-Transmission) bezeichnet und stellen Getriebe mit zwei oder mehr Fahrbereichen dar, die unter anderem in Werkzeugmaschinen sowie in Fahrzeugen verwendet werden. Mit solchen Getrieben ausgebildete Fahrzeuge sind in Vorwärtsfahrtrichtung sowie in Rückwärtsfahrtrichtung betreibbar. Innerhalb der Fahrbereiche ist jeweils eine Übersetzung eines Leistungsverzweigungsgetriebes stufenlos einstellbar. Der hydrostatische Zweig weist hierfür meist eine erste Hydrostateinheit und eine zweite Hydrostateinheit auf, deren Hubvolumina verstellbar sind. Weitere Leistungsverzweigungsgetriebe mit allen Merkmalen des Oberbegriffes des Anspruchs 1 sind aus der GB 1 161 508 A bzw. aus der DE 198 02 766 A1 bekannt.

Nachteilhafterweise sind diese Leistungsverzweigungsgetriebe bzw. Getriebevorrichtungen mit sekundär gekoppelter Leistungsverzweigung sowohl durch hohe Herstellkosten als auch durch einen hohen Bauraumbedarf gekennzeichnet. Die Kombination dieser CVT-Getriebe in Fahrzeugantriebssträngen mit Antriebsmaschinen, deren Antriebsleistung gering ist, wird trotz der vielen Vorteile im Betrieb aus wirtschaftlicher Sicht nur bedingt favorisiert.

Der vorliegenden Erfindung liegt daher die Aufgabe zugrunde, eine bauraum- und kostengünstige Getriebevorrichtung mit sekundär gekoppelter Leistungsverzweigung zur Verfügung zu stellen, mittels welcher eine gewünschte Funktionalität insbesondere bei Fahrzeugantriebssträngen mit leistungsschwächeren Antriebsmaschinen zur Verfügung stellbar ist.

Erfindungsgemäß wird diese Aufgabe mit einer Getriebevorrichtung mit den Merkmalen des Patentanspruches 1 gelöst.

Bei der erfindungsgemäßen Getriebevorrichtung mit sekundär gekoppelter Leistungsverzweigung ist ein Teil eines anliegenden Drehmomentes in einem ersten Leistungszweig wenigstens über eine Hydrostateinrichtung und der andere Teil des Drehmomentes in einem zweiten Leistungszweig über eine mechanische Einrichtung zwischen einem Getriebeeingang und einem Getriebeausgang führbar. Die Hydrostateinrichtung des ersten Leistungszweiges umfasst wenigstens eine Pumpe und wenigstens einen über einen hydraulischen Kreislauf damit wirkverbundenen Motor, die beide verstellbar sind, wobei die beiden Leistungszweige über ein Summierungsgetriebe summierbar sind.

Erfindungsgemäß ist die Pumpe kleiner als der Motor dimensioniert, womit eine Spreizung der erfindungsgemäßen Getriebevorrichtung bzw. ein Zugkraft-Geschwindigkeits-Verhältnis im Vergleich zu bekannten Getriebevorrichtungen, deren Hydrostateinrichtung mit gleich großen Hydrostateinheiten ausgebildet ist, vergrößerbar ist. Damit ist die Getriebevorrichtung nach der Erfindung im Vergleich zu an sich bekannten Getriebevorrichtungen mit sekundär gekoppelter Leistungsverzweigung bauraum- und kostengünstiger ausführbar, ohne ein im Bereich eines Getriebeausgangs zur Verfügung zu stellendes Drehmoment bzw. eine im Bereich eines Abtriebs eines mit der Getriebevorrichtung ausgeführten Fahrzeugantriebsstranges zur Verfügung zu stellende Zugkraft in unerwünschtem Umfang zu begrenzen und auf bauraum- und kostengünstige Art und Weise im angeforderten Umfang darstellen zu können. Die mit dem Motor zusammenwirkende Pumpe ist vergleichsweise kleiner auszuführbar, wenn im Bereich der Pumpe bei einer mit geringerer Leistungsfähigkeit ausgeführten Antriebsmaschine eines Fahrzeugantriebsstranges im Vergleich zu den aus dem Stand der Technik bekannten Getriebevorrichtungen ein geringeres Drehmoment abzustützen ist.

Unterschiedlich groß dimensionierte Hydrostateinheiten der Hydrostateinrichtung bieten des Weiteren auf einfache Art und Weise die Möglichkeit, die erfindungsgemäße Getriebevorrichtung als konstruktiv einfaches und bauraumgünstiges Einbereichsgetriebe auszuführen, in dem eine Übersetzung durch entsprechende Verstellung der Pumpe und des Motors der Hydrostateinrichtung stufenlos variierbar ist, da über den gesamten Betriebsbereich eines mit der erfindungsgemäßen Getriebevorrichtung ausgeführten Fahrzeuges im Bereich eines Abtriebs jeweils ein Zugkraftangebot mit einer im Vergleich zum Motor kleiner dimensionierten und daher bauraum- und kostengünstigen Pumpe in gewünschtem Umfang zur Verfügung stellbar ist.

Ist ein mit der erfindungsgemäßen Getriebevorrichtung ausgeführter Fahrzeugantriebsstrang mit einer Antriebsmaschine, vorzugsweise einer Dieselbrennkraftmaschine, mit einer Leistung von etwa 100 kW ausgebildet, ist ein solches Fahrzeug mit einer Pumpe mit einem Fördervolumen von etwa 120 cm³/U und einem Motor mit einem Schluckvolumen von etwa 360 cm³/U anforderungsgemäß mit einem einzigen Übersetzungsbereich betreibbar.

Bei einer weiteren bauraum- und kostengünstigen Ausführungsform der erfindungsgemäßen Getriebevorrichtung sind zwischen einem Getriebeeingang und dem Summierungsgetriebe wenigstens zwei Fahrtrichtungsschaltelemente vorgesehen, mittels welchen zwischen einem Modus für Vorwärtsfahrt und einem Modus für Rückwärtsfahrt umschaltbar ist. Aufgrund der in Bezug auf das Summierungsgetriebe getriebeeingangsseitigen Anordnung der Fahrtrichtungsschaltelemente sind diese mit geringem Bauraumbedarf auf kostengünstige Art und Weise ausführbar, da in diesem Bereich des Leistungsflusses der Getriebevorrichtung geringere Drehmomente von den Fahrtrichtungsschaltelementen zu übertragen sind als bei einer in Bezug auf das Summierungsgetriebe getriebeausgangsseitigen Anordnung der Fahrtrichtungsschaltelemente. Darüber hinaus bietet die getriebeeingangsseitige Anordnung der Fahrtrichtungsschaltelemente die Möglichkeit, die Fahrtrichtungsschaltelemente oberhalb eines Füllstandes eines Getriebeölsumpfes der erfindungsgemäßen Getriebevorrichtung anzuordnen, womit durch Planschverluste und dergleichen verursachte Verlustleistungen im Bereich der Fahrtrichtungsschaltelemente auf einfache Art und Weise reduziert sind.

Eine an einen vorhandenen Bauraum in einem Fahrzeug angepasste Ausführungsform der erfindungsgemäßen Getriebevorrichtung ist dadurch gekennzeichnet, dass zwischen einem Getriebeausgang und dem Summierungsgetriebe wenigstens zwei Fahrtrichtungsschaltelemente vorgesehen sind, mittels welchen zwischen einem Modus für Vorwärtsfahrt und einem Modus für Rückwärtsfahrt umschaltbar ist.

Die erfindungsgemäße Getriebevorrichtung ist mit einem als Planetengetriebeeinrichtung ausgebildeten Summierungsgetriebe mit wenigstens drei Wellen ausgebildet, wobei eine erste Welle der Planetengetriebeeinrichtung mit dem Getriebeeingang, die zweite Welle der Planetengetriebeeinrichtung mit der Pumpe und eine dritte Welle der Planetengetriebeeinrichtung mit dem Motor und dem Getriebeausgang in Wirkverbindung steht.

Bei einer bevorzugten Ausführungsform der erfindungsgemäßen Getriebevorrichtung ist die erste Welle der Planetengetriebeeinrichtung ein Planetenträger, die zweite Welle der Planetengetriebeeinrichtung ein Sonnenrad und die dritte Welle der Planetengetriebeeinrichtung ein Hohlrad, die vorzugsweise als Plusplanetenradsatz ausgebildet ist.

In Abhängigkeit des jeweils vorliegenden Anwendungsfalles besteht jedoch auch die Möglichkeit, dass die jeweils als Planetenträger, Sonnenrad oder Hohlrad ausgeführte Welle der Planetengetriebeeinrichtung mit dem Getriebeeingang, der Pumpe oder dem Motor und dem Getriebeausgang gekoppelt ist.

Um die Übersetzung der erfindungsgemäßen Getriebevorrichtung innerhalb eines möglichst großen Übersetzungsbereiches stufenlos verändern zu können, sind ein Schluckvolumen des Motors und ein Fördervolumen der Pumpe der Hydrostateinrichtung bei einer vorteilhaften Ausführungsform der Getriebevorrichtung in einem Bereich von 0 % bis 100 % variierbar. Das anstehende Drehmoment ist bei maximalem Schluckvolumen des Motors und minimalem Fördervolumen der Pumpe vollständig über den die Hydrostateinrichtung aufweisenden ersten Leistungszweig und bei minimalem Schluckvolumen des Motors maximalem Fördervolumen der Pumpe vollständig über den die mechanische Einrichtung aufweisenden zweiten Leistungszweig führbar.

Bei einer in radialer Richtung einen geringen Bauraumbedarf aufweisenden Ausführungsform der erfindungsgemäßen Getriebevorrichtung sind der Getriebeeingang und die Hydrostateinrichtung auf derselben Seite des Summierungsgetriebes angeordnet.

Ist die Hydrostateinrichtung auf einer Seite des Summierungsgetriebes und der Getriebeeingang auf der anderen Seite des Summierungsgetriebes angeordnet, ist die erfindungsgemäße Getriebevorrichtung durch einen geringen axialen Bauraumbedarf gekennzeichnet, wenn beispielsweise auf der Seite der Hydrostateinrichtung in axialer Richtung auch eine Leistungsentnahme in Richtung eines Nebenabtriebs vorgesehen ist.

Bei einer konstruktiv einfachen und bauraumgünstigen Ausführungsform der erfindungsgemäßen Getriebevorrichtung ist der Getriebeausgang wenigstens im Bereich einer mit einer Ausgangswelle des Motors in Wirkverbindung bringbaren und/oder wirkverbundenen Welle vorgesehen, wobei die Positionierung des Getriebeausgangs im Bereich der Ausgangswelle des Motors selbst besonders bauraumgünstig ist, da dann keine mit Achsversatz zur Ausgangswelle des Motors vorgesehene weitere Getriebeausgangswelle erforderlich ist.

Ist der Getriebeausgang sowohl im Bereich einer mit der Ausgangswelle des Motors in Wirkverbindung bringbaren als auch im Bereich einer mit der Ausgangswelle wirkverbundenen Welle vorgesehen, steht auf einfache Art und Weise ein versetzter Abtrieb zur Verfügung, der beispielsweise bei Baggerladern bevorzugt ist. Dabei kann es vorgesehen sein, dass ein Abtrieb zu einer Vorderachse über eine optionale Vorderachskupplung bedarfsweise zuschaltbar ist und ein Abtrieb in Richtung einer Hinterachse über eine achsversetzt zur Ausgangswelle des Motors angeordnete weitere Abtriebswelle, die über eine Zahnradpaarung mit der Ausgangswelle des Motors in Wirkverbindung steht, vorgesehen ist.

Ist im Bereich des Getriebeeingangs zumindest ein Teil eines getriebeeingangsseitig anliegenden Drehmomentes in Richtung wenigstens einer mit einem Nebenabtrieb koppelbaren weiteren Welle abzweigbar, sind neben dem Fahrantrieb eines Fahrzeuges auch weitere Gerätschaften bedarfsweise mit Drehmoment versorgbar, wobei eine Anordnung der Hydrostateinrichtung und der mit dem Nebenabtrieb koppelbaren weiteren Welle auf derselben Seite des Summierungsgetriebes und eine gleichzeitige Anordnung des Getriebeeingangs auf der gegenüberliegenden Seite des Summierungsgetriebes eine in axialer Richtung bauraumgünstige Ausführungsform der erfindungsgemäßen Getriebevorrichtung darstellt.

Die Pumpe und der Motor sind in Einbaulage der Getriebevorrichtung in einem Fahrzeug bei weiteren vorteilhaften Ausführungsformen der erfindungsgemäßen Getriebevorrichtung jeweils an den vorhandenen Bauraum angepasst zueinander positioniert, um in einem Fahrzeug vorhandenen Bauraum zu nutzen, womit die erfindungsgemäße Getriebevorrichtung auf einfache Art und Weise in bestehende Fahrzeugkonzepte ohne aufwändige konstruktive Maßnahmen implementierbar ist.

Dabei kann es vorgesehen sein, dass die Pumpe und der Motor in Einbaulage der Getriebevorrichtung in einem Fahrzeug bauraumgünstig in Fahrzeughochrichtung übereinander oder in Fahrzeuglängs- oder Fahrzeugquerrichtung im Wesentlichen nebeneinander angeordnet sind.

Dadurch, dass die Pumpe und der Motor über ein Doppeljoch gemeinsam verschwenkbar ausgebildet sind, ist die erfindungsgemäße Getriebevorrichtung mit geringem Steuer- und Regelaufwand betreibbar.

Bei einer weiteren vorteilhaften Ausführungsform sind die Fahrtrichtungsschaltelemente als reibschlüssige Lastschaltelemente ausgebildet, um einen Fahrtrichtungswechsel im Wesentlichen zugkraftunterbrechungsfrei darstellen zu können und um auch sogenannte Reversiervorgänge in gewünschtem Umfang umsetzen zu können.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen.

Es zeigt:
- Fig. 1: ein Getriebeschema einer ersten Ausführungsform der erfindungsgemäßen Getriebevorrichtung mit sekundär gekoppelter Leistungsverzweigung;
- Fig. 2: eine Fig. 1 entsprechende Darstellung einer zweiten Ausführungsform der erfindungsgemäßen Getriebevorrichtung;
- Fig. 3: eine Fig. 1 entsprechende Darstellung einer dritten Ausführungsform der erfindungsgemäßen Getriebevorrichtung; und
- Fig. 4: eine Fig. 1 entsprechende Darstellung einer vierten Ausführungsform der erfindungsgemäßen Getriebevorrichtung.

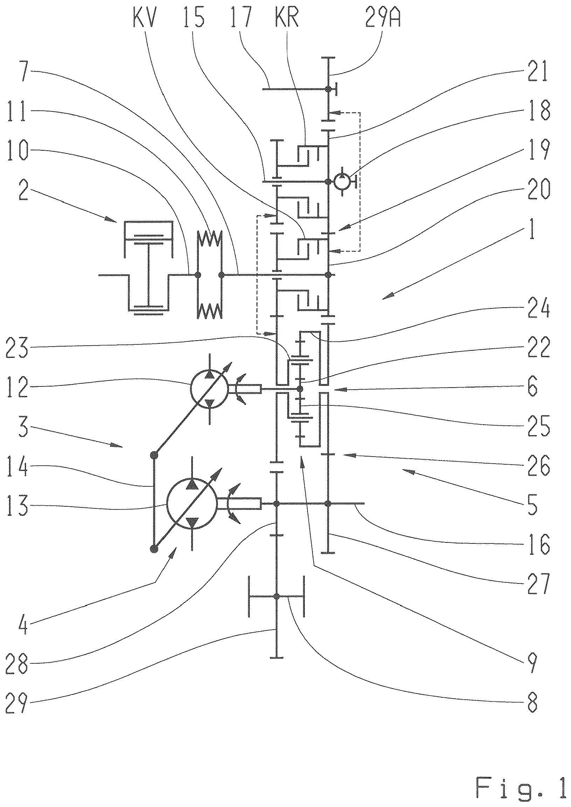

In Fig. 1 ist ein Räderschema einer Getriebevorrichtung 1 mit sekundär gekoppelter Leistungsverzweigung dargestellt. Ein Teil eines von einer vorliegend als Brennkraftmaschine, vorzugsweise als Dieselbrennkraftmaschine, ausgeführten Antriebsmaschine 2 anliegenden Drehmomentes ist in einem ersten Leistungszweig 3 über eine Hydrostateinrichtung 4 und der andere Teil des Drehmomentes in einem zweiten Leistungszweig 5 über eine mechanische Einrichtung 6 zwischen einem Getriebeeingang bzw. einer Getriebeeingangswelle 7 und einem Getriebeausgang bzw. einer Getriebeausgangswelle 8 führbar. Die beiden Leistungszweige 3 und 5 stehen über ein als Planetengetriebeeinrichtung ausgeführtes Summierungsgetriebe in Wirkverbindung.

Zwischen einer Ausgangswelle 10 der Antriebsmaschine 2 und der Getriebeeingangswelle 7 ist ein sogenannter Schwingungsdämpfer 11 angeordnet, mittels welchem Drehungleichförmigkeiten im Bereich der Antriebsmaschine 2 gedämpft und nur zu einem geringen Anteil in die Getriebevorrichtung 1 und in den restlichen Teil des Antriebsstranges eines Fahrzeuges bzw. eines Baufahrzeuges eingeleitet werden.

Die Getriebevorrichtung 1 ist mit einem Fahrbereich für Vorwärts- und Rückwärtsfahrt ausgeführt, welche über Fahrtrichtungsschaltelemente KR und KV zu- oder abschaltbar sind. Die Hydrostateinrichtung 4 des ersten Leistungszweiges 3 umfasst eine Pumpe 12 und einen über einen in der Zeichnung nicht näher dargestellten hydraulischen Kreislauf damit wirkverbundenen Motor 13, die über ein gemeinsames Joch 14 verstellt werden und als Schrägachseneinheiten ausgeführt sind.

In Abhängigkeit des jeweils vorliegenden Anwendungsfalles besteht jedoch auch die Möglichkeit, dass die Pumpe und der Motor unabhängig voneinander einstellbar sind und eine andere ebenfalls geeignete Bauform aufweisen.

Zusätzlich ist die Getriebevorrichtung 1 als Vorgelegegetriebe mit mehreren in radialer Richtung zueinander beabstandeten Vorgelegewellen 15 bis 17 ausgebildet, womit die Getriebevorrichtung 1 in axialer Richtung einen geringen Bauraumbedarf und in radialer Richtung bzw. in Fahrzeughochrichtung einen hohen Bauraumbedarf aufweist, wobei dieser zur Überbrückung eines Achsabstandes zwischen der Ausgangswelle 10 der Antriebsmaschine 2 bzw. der Getriebeeingangswelle 7 und von Antriebsachsen eines beispielsweise als Stapler, Radlader oder dergleichen ausgeführten Fahrzeuges überbrückbar ist.

Zwischen dem Getriebeeingang 7 und der Planetengetriebeeinrichtung 9 sind die beiden als reibschlüssige Lastschaltelemente ausgebildeten Fahrtrichtungsschaltelemente KV und KR vorgesehen, mittels welchen zwischen einem Modus für Vorwärtsfahrt und einem Modus für Rückwärtsfahrt umgeschaltet werden kann. Auf der dem Fahrtrichtungsschaltelement KR für Rückwärtsfahrt zugeordneten Vorgelegewelle 15 ist eine Getriebepumpe 18 angeordnet, die wie die Vorgelegewelle 15 von der Getriebeeingangswelle 7 über eine Zahnradpaarung 19 antreibbar ist.

Die Übersetzung der Zahnradpaarung 19, die aus einem ersten drehfest mit der Getriebeeingangswelle 7 verbundenen und als Stirnrad ausgeführten Zahnrad 20 und einem zweiten Zahnrad 21 gebildet ist, ist dabei derart, dass die Drehzahl der Getriebeeingangswelle 7 in Richtung der Vorgelegewelle 15 ins Schnelle übersetzt wird. Dadurch läuft die Getriebepumpe 18 vorliegend mit etwa 20 % höherer Drehzahl als die Antriebsmaschine 2 und ist bei dieser Ausgestaltung der Getriebevorrichtung 1 im Vergleich zu einer direkt auf der Getriebeeingangswelle 7 angeordneten Getriebepumpe kleiner dimensionierbar.

Neben der Getriebepumpe 18 ist im Bereich der Vorgelegewelle 15 eine weitere Leistungsentnahme möglich, die für die Betätigung der Arbeitsausrüstung eines vorzugsweise als Baggerlader oder dergleichen ausgeführten Baufahrzeuges oder eines Staplers vorgesehen ist. Dabei werden in einem offenen hydraulischen Kreislauf angeordnete hydraulische Zylinder, mittels welchen beispielsweise eine Ladeschaufel, eine Hubeinrichtung eines Staplers oder dergleichen betätigbar ist, über die Vorgelegewelle und eine darüber antreibbare weitere Pumpeneinrichtung mit entsprechendem Arbeitsdruck versorgt. Der Nebenabtrieb ist bei dem in Fig. 1 dargestellten Ausführungsbeispiel im Bereich der Vorgelegewelle 15 auf der der Antriebsmaschine 2 abgewandten Seite der Getriebevorrichtung 1 an die Getriebevorrichtung 1 koppelbar, über den bedarfsweise auch beliebige andere Verbraucher mit Drehmoment beaufschlagbar sind.

Über die Getriebepumpe 18 ist neben dem die Pumpe 12 und den Motor 13 der Hydrostateinrichtung 4 miteinander verbindenden hydraulischen Kreislauf, der als geschlossener Kreislauf ausgebildet ist, auch ein Schmier- und Kühlkreislauf mit Hydraulikfluid beaufschlagbar. Zusätzlich sind auch die Fahrtrichtungsschaltelemente KR und KV über die Getriebepumpe 18 mit hydraulischem Arbeitsdruck beaufschlagbar und von einem im Wesentlichen geöffneten Betriebszustand in einen im Wesentlichen vollständig geschlossenen Betriebszustand überführbar.

Die als einfacher Planetenradsatz ausgebildete Planetengetriebeeinrichtung umfasst drei Wellen 22 bis 24, wobei eine erste Welle 22 als Sonnenrad, eine zweite Welle 23 als Planetenträger und eine dritte Welle 24 als Hohlrad ausgeführt ist. Die Getriebeeingangswelle 7 ist über die Fahrtrichtungsschaltelemente KR und KV mit dem Planetenträger 23 der Planetengetriebeeinrichtung 9 in Wirkverbindung bringbar, während die Pumpe 12 der Hydrostateinrichtung 4 mit dem Sonnenrad 22 der Planetengetriebeeinrichtung 9 verbunden ist. Drehbar auf dem Planetenträger 23 gelagerte Planetenräder 25 kämmen sowohl mit dem Sonnenrad 22 als auch mit dem Hohlrad 24, womit ein von der Getriebeeingangswelle 7 über das Fahrtrichtungsschaltelement KV oder KR in Richtung des Planetenträgers 23 geführtes Drehmoment über das Sonnenrad 22 in Richtung der Pumpe 12 und über die Planetenräder 25 und das Hohlrad 24 über eine weitere Zahnradpaarung 26 in Richtung der weiteren Vorgelegewelle 16 führbar ist.

Steht der Motor 13 still und dreht die Pumpe 12 mit maximaler Drehzahl, ist das Schluckvolumen des Motors 13 maximal, während das Fördervolumen der Pumpe 12 gleich null ist. Die Antriebsleistung der Antriebsmaschine 2 wird dann vollständig hydrostatisch über die Getriebevorrichtung 1 übertragen, wobei dies einer ersten Grenze des einen Fahrbereiches der Getriebevorrichtung 1 entspricht. Die zweite Grenze des Fahrbereiches der Getriebevorrichtung 1 liegt dann vor, wenn die Pumpe 12 stillsteht und die Drehzahl des Motors 13 maximal ist, wobei das Schluckvolumen des Motors 13 dann gleich null ist und das Fördervolumen der Pumpe 12 seinen maximalen Wert aufweist. In diesem Betriebszustand der Hydrostateinrichtung 4 wird die Antriebsleistung der Antriebsmaschine 2 über die Getriebevorrichtung 1 vollständig mechanisch zwischen der Getriebeeingangswelle 7 und der Getriebeausgangswelle 8 übertragen.

In Abhängigkeit eines eingestellten Schluckvolumens des Motors 13 und des ebenfalls einstellbaren Fördervolumens der Pumpe 12 ist wenigstens ein Teil des von der Antriebsmaschine 2 anliegenden Drehmomentes über das Hohlrad 24 der Planetengetriebeeinrichtung 9 über den die mechanische Einrichtung 6 aufweisenden zweiten Leistungszweig 5 und der andere Teil über den ersten Leistungszweig 4 in Richtung des Getriebeausgangs 8 weiterleitbar.

Die zweite Vorgelegewelle 16 stellt vorliegend die Motorausgangswelle des Motors 13 dar, die neben einem Zahnrad 27 der zweiten Zahnradpaarung 26 ein weiteres Festrad 28 umfasst, das wiederum mit einem weiteren Festrad 29 der Getriebeausgangswelle 8 kämmt. Zusätzlich kämmt das Zahnrad 20, das als Festrad drehfest mit der Getriebeeingangswelle 7 verbunden ist, mit einem Festrad 29A der dritten Vorgelegewelle 17, in deren Bereich wiederum eine Leistungsabnahme in Richtung eines weiteren Nebenabtriebes möglich ist, um weitere Gerätschaften eines vorzugsweise als Gabelstapler, als Baufahrzeug oder dergleichen ausgeführten Fahrzeuges antreiben zu können.

Der mit dem Hohlrad 24 wirkverbundene Motor 13 ist vorliegend größer ausgeführt als die mit dem Sonnenrad 22 gekoppelte Pumpe 12, wobei der Motor 13 ein Schluckvolumen von ca. 360 cm³/U und die Pumpe 12 beispielsweise ein Fördervolumen von 120 cm³/U aufweist, wenn eine maximale Leistung der Antriebsmaschine 2 etwa 100 kW beträgt. Durch die unterschiedlich große Auslegung des Motors 13 und der Pumpe 12 ist die Spreizung bzw. ein Zugkraft-Geschwindigkeits-Verhältnis im Vergleich zu gleich groß ausgeführten Hydroeinheiten einer Hydrostateinrichtung größer. Im Bereich der Pumpe 12 ist aufgrund der vergleichsweise geringen maximalen Leistung der Antriebsmaschine 2 nur ein geringes Drehmoment abzustützen, weshalb die Pumpe 12 mit geringer Leistungsfähigkeit ausführbar ist. Um jedoch die Zugkraft im Bereich der Getriebeausgangswelle 8 möglichst groß darstellen zu können, wird vorliegend ein entsprechend großvolumiger Hydromotor verwendet.

Die unterschiedliche Auslegung des Motors 13 und der Pumpe 12 ist einfach realisierbar, wenn die Getriebevorrichtung 1 wie dargestellt nur einen Übersetzungsbereich aufweist und die Pumpe 12 und der Motor 13 nur in zwei sogenannten Quadranten betrieben werden. Im Unterschied hierzu werden Hydrostateinheiten von stufenlos leistungsverzweigten Getrieben aufgrund der wechselnden Funktionsweise mit mehreren Übersetzungsbereichen in vier Quadranten betrieben, weshalb diese zwingend gleich groß auszuführen sind.

Wird die Getriebevorrichtung 1 gemäß Fig. 1 beispielsweise in einem Gabelstapler verwendet, der nur eine angetriebene Fahrzeugachse aufweist, ist die Getriebeausgangswelle 8 der Getriebevorrichtung 1 gemäß Fig. 1 nicht erforderlich und der Abtrieb kann auf bauraumgünstige Art und Weise im Bereich der zweiten Vorgelegewelle 16 mit der Getriebevorrichtung 1 verbunden werden.

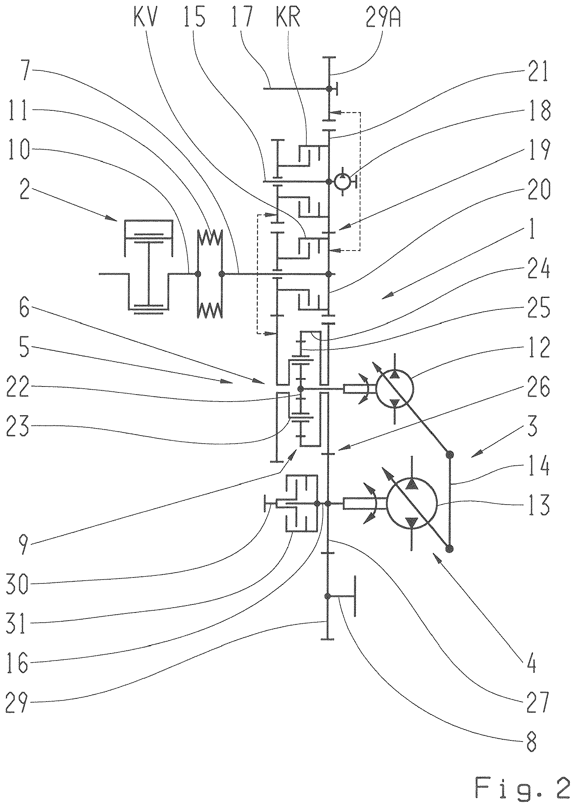

Fig. 2 zeigt eine Fig. 1 entsprechende Darstellung eines zweiten Ausführungsbeispiels der Getriebevorrichtung 1, die sich nur in Teilbereichen von dem ersten Ausführungsbeispiel gemäß Fig. 1 unterscheidet. Aus diesem Grund wird zugunsten der Übersichtlichkeit in der nachfolgenden Beschreibung lediglich auf die Unterschiede zwischen den beiden Ausführungsbeispielen eingegangen und bezüglich der weiteren Funktionsweise der Getriebevorrichtung 1 gemäß Fig. 2 auf die vorstehende Beschreibung zu Fig. 1 verwiesen.

Bei der zweiten Ausführungsform der Getriebevorrichtung 1 gemäß Fig. 2 ist die Hydrostateinheit 4 auf der einen Seite der Planetengetriebeeinrichtung 9 vorgesehen, während die Getriebeeingangswelle 7 auf der hierzu gegenüberliegenden Seite der Planetengetriebeeinrichtung 9 verläuft. Das bedeutet, dass die Hydrostateinrichtung 4 und die Drehmomententnahme in Richtung eines Nebenabtriebes im Bereich der ersten Vorgelegewelle 15 auf der gleichen Seite der Planetengetriebeeinrichtung 9 und gegenüberliegend zur Getriebeeingangswelle 7 vorgesehen sind, womit die Getriebevorrichtung 1 gemäß Fig. 2 durch einen in axialer Richtung geringen Bauraumbedarf gekennzeichnet ist.

Des Weiteren ist die Getriebevorrichtung 1 gemäß Fig. 2 mit einem in radialer Richtung versetzten Abtrieb ausgeführt, da ein Teil des Getriebeausgangsmomentes über die achsversetzt zur Vorgelegewelle 16 vorgesehene Getriebeausgangswelle 8 und ein weiterer Teil über eine koaxial zur Vorgelegewelle 16 bzw. der Ausgangswelle des Motors 13 angeordnete weitere Getriebeausgangswelle 30 aus der Getriebevorrichtung 1 führbar ist. Die weitere Getriebeausgangswelle 30 ist vorliegend über ein als reibschlüssige Kupplung ausgeführtes Schaltelement 31 mit der zweiten Vorgelegewelle 16 in Wirkverbindung bringbar, womit der auf die weitere Getriebeausgangswelle 30 führbare Teil des Getriebeausgangsmomentes der Getriebevorrichtung 1 zusätzlich in Abhängigkeit der Übertragungsfähigkeit des Schaltelementes 31 variierbar ist.

Dabei besteht beispielsweise die Möglichkeit, dass über die Getriebeausgangswelle 8 Drehmoment in Richtung einer Fahrzeughinterachse eines Baggerladers geführt wird, während über die zuschaltbare weitere Getriebeausgangswelle 30 eine Fahrzeugvorderachse eines Baggerladers mit Antriebsmoment versorgbar ist.

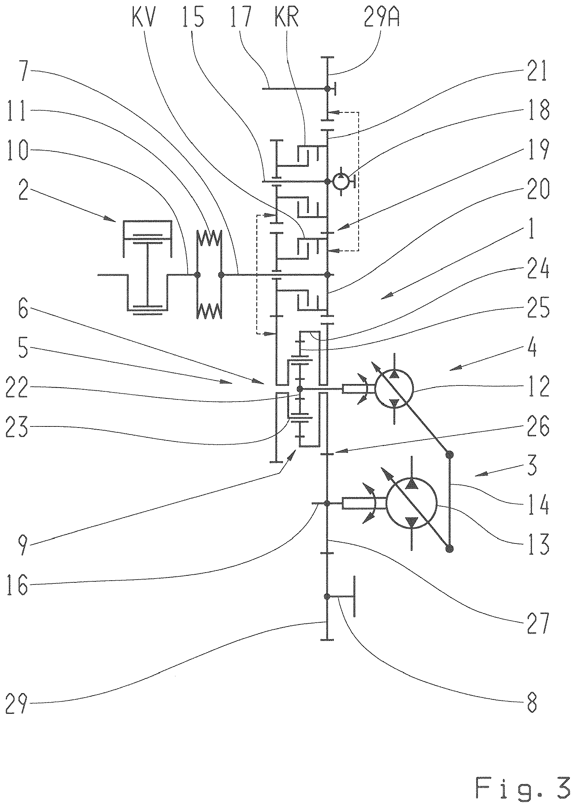

Fig. 3 zeigt ein Räderschema einer dritten Ausführungsform der Getriebevorrichtung 1, die im Wesentlichen der zweiten Ausführungsform der Getriebevorrichtung 1 gemäß Fig. 2 entspricht. Die Getriebevorrichtung 1 gemäß Fig. 3 ist ohne das Schaltelement 31 und die weitere Getriebeausgangswelle 30 der Getriebevorrichtung 1 gemäß Fig. 2 ausgeführt. Die Getriebevorrichtung 1 gemäß Fig. 3 ist nur im Bereich der Getriebeausgangswelle 8 auf der der Antriebsmaschine 2 abgewandten Seite der Getriebevorrichtung 1 mit dem Abtrieb koppelbar, wie es bei herkömmlichen Staplerantrieben bevorzugt ist.

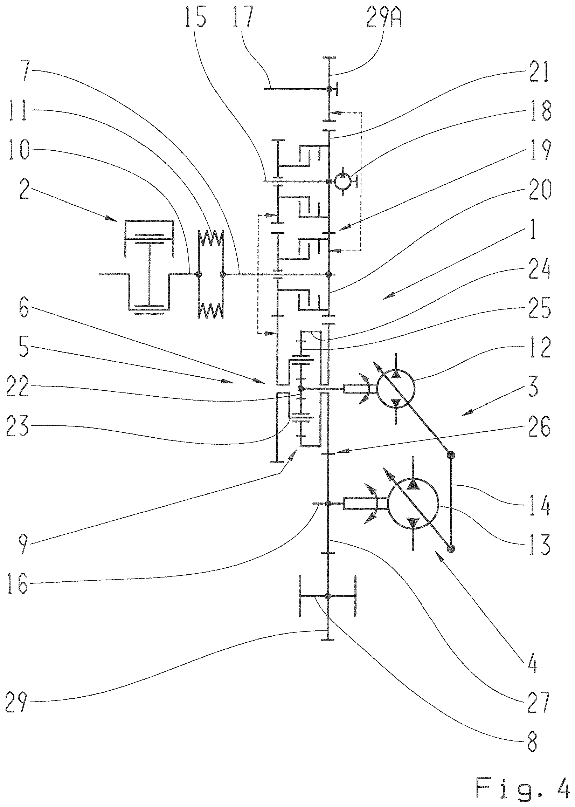

Bei dem in Fig. 4 dargestellten vierten Ausführungsbeispiel der Getriebevorrichtung 1 ist die Hydrostateinrichtung 4 wie bei der zweiten und dritten Ausführungsform der Getriebevorrichtung 1 gemäß Fig. 2 und Fig. 3 auf der einen Seite der Planetengetriebeeinrichtung 9 angeordnet, während die Getriebeeingangswelle 7 auf der anderen Seite der Planetengetriebeeinrichtung 9 in Richtung der Antriebsmaschine 2 verlaufend angeordnet ist. Im Bereich des Getriebeausgangs bzw. der Getriebeausgangswelle 8 entspricht die Getriebevorrichtung 1 gemäß Fig. 4 im Wesentlichen der ersten Ausführung der Getriebevorrichtung 1 gemäß Fig. 1.

Bei allen in der Zeichnung dargestellten Ausführungsformen der Getriebevorrichtung 1 besteht die Möglichkeit, die Hydrostateinrichtung 4 in Einbaulage der Getriebevorrichtung 1 vertikal, d. h. in Fahrzeughochrichtung gesehen übereinander, oder horizontal, das bedeutet in Fahrzeugquer- oder Fahrzeuglängsrichtung gesehen nebeneinander, anzuordnen, wobei die Pumpe 12 bei vertikaler Anordnung über dem Motor 13 zu positionieren ist. Besonders bei einer Anordnung der Hydrostateinrichtung 4 gemäß Fig. 2 bis Fig. 4 ist ein Direktanbau der Antriebsmaschine 2 und der Getriebevorrichtung 1 möglich.

### Bezugszeichen

- 1: Getriebevorrichtung
- 2: Antriebsmaschine
- 3: erster Leistungszweig
- 4: Hydrostateinrichtung
- 5: zweiter Leistungszweig
- 6: mechanische Einrichtung
- 7: Getriebeeingangswelle, Getriebeeingang
- 8: Getriebeausgangswelle, Getriebeausgang
- 9: Summierungsgetriebe, Planetengetriebeeinrichtung
- 10: Ausgangswelle der Antriebseinrichtung
- 11: Schwingungsdämpfer
- 12: Pumpe
- 13: Motor
- 14: Joch
- 15 bis 17: Vorgelegewelle
- 18: Getriebepumpe
- 19: Zahnradpaarung
- 20: Zahnrad
- 21: Zahnrad
- 22: Sonnenrad
- 23: Planetenträger
- 24: Hohlrad
- 25: Planetenrad
- 26: Zahnradpaarung
- 27: Zahnrad
- 28: Festrad
- 29: Festrad
- 29A: Festrad
- 30: weitere Getriebeausgangswelle
- 31: Schaltelement

## Patentansprüche

1. Getriebevorrichtung (1) mit sekundär gekoppelter Leistungsverzeigung, wobei ein Teil eines anliegenden Drehmomentes in einem ersten Leistungszweig (3) wenigstens über eine Hydrostateinrichtung (4) und der andere Teil des Drehmomentes in einem zweiten Leistungszweig (5) über eine mechanische Einrichtung (6) zwischen einem Getriebeeingang (7) und einem Getriebeausgang (8) führbar ist, wobei die Hydrostateinrichtung (4) des ersten Leistungszweiges (3) wenigstens eine Pumpe (12) und wenigstens einen über einen hydraulischen Kreislauf damit wirkverbundenen Motor (13) umfasst, die beide verstellbar sind, wobei die beiden Leistungszweige (3, 5) über ein Summierungsgetriebe (9) summierbar sind, wobei das Summierungsgetriebe (9) als Planetengetriebeeinrichtung mit drei Wellen (22, 23, 24) ausgebildet ist, wobei eine erste Welle (23) der Planetengetriebeeinrichtung (9) mit dem Getriebeeingang (7), eine zweite Welle (22) der Planetengetriebeeinrichtung (9) mit der Pumpe (12) und eine dritte Welle (24) der Planetengetriebeeinrichtung (9) mit dem Motor (13) und dem Getriebeausgang (8) in Wirkverbindung steht, und wobei nur ein Übersetzungsbereich vorgesehen ist, innerhalb dem eine Übersetzung über die Hydrostateinrichtung (4) stufenlos variierbar ist, **dadurch gekennzeichnet, dass** das maximale Fördervolumen der Pumpe (12) kleiner dimensioniert als das maximale Schluckvolumen des Motors (13) ist und die Pumpe (12) und der Motor (13) über ein Joch (14) gemeinsam verstellbar sind

2. Getriebevorrichtung nach Anspruch 1, **dadurch gekennzeichnet, dass** zwischen dem Getriebeeingang (7) und dem Summierungsgetriebe (9) wenigstens zwei Fahrtrichtungsschaltelemente (KR, KV) vorgesehen sind, mittels welchen zwischen einem Modus für Vorwärtsfahrt und einem Modus für Rückwärtsfahrt umschaltbar ist.

3. Getriebevorrichtung nach Anspruch 1, **dadurch gekennzeichnet, dass** zwischen einem Getriebeausgang und dem Summierungsgetriebe wenigstens zwei Fahrtrichtungsschaltelemente vorgesehen sind, mittels welchen zwischen einem Modus für Vorwärtsfahrt und einem Modus für Rückwärtsfahrt umschaltbar ist.

4. Getriebevorrichtung nach Anspruch 1, **dadurch gekennzeichnet, dass** die erste Welle (23) der Planetengetriebeeinrichtung (9) ein Planetenträger, die zweite Welle (22) der Planetengetriebeeinrichtung (9) ein Sonnenrad und die dritte Welle (24) der Planetengetriebeeinrichtung (9) ein Hohlrad ist.

5. Getriebevorrichtung nach einem der Ansprüche 1 bis 4, **dadurch gekennzeichnet, dass** ein Schluckvolumen des Motors (13) und ein Fördervolumen der Pumpe (12) in einem Bereich von 0 % bis 100 % variierbar sind, wobei das anstehende Drehmoment bei maximalem Schluckvolumen des Motors (13) und minimalem Fördervolumen der Pumpe (12) vollständig über den die Hydrostateinrichtung (4) aufweisenden ersten Leistungszweig (3) und bei minimalem Schluckvolumen des Motors (13) und maximalem Fördervolumen der Pumpe (12) vollständig über den die mechanische Einrichtung (6) aufweisenden zweiten Leistungszweig (5) geführt wird.

6. Getriebevorrichtung nach einem der Ansprüche 1 bis 5, **dadurch gekennzeichnet, dass** die Hydrostateinrichtung (4) und der Getriebeeingang (7) auf derselben Seite des Summierungsgetriebes (9) angeordnet sind.

7. Getriebevorrichtung nach einem der Ansprüche 1 bis 6, **dadurch gekennzeichnet, dass** die Hydrostateinrichtung (4) auf einer Seite des Summierungsgetriebes (9) und der Getriebeeingang (7) auf der anderen Seite des Summierungsgetriebes (9) angeordnet ist.

8. Getriebevorrichtung nach einem der Ansprüche 1 bis 7, **dadurch gekennzeichnet, dass** der Getriebeausgang (8) wenigstens im Bereich einer mit einer Ausgangswelle (16) des Motors (13) in Wirkverbindung bringbaren und/oder wirkverbundenen Welle (30) vorgesehen ist.

9. Getriebevorrichtung nach einem der Ansprüche 1 bis 8, **dadurch gekennzeichnet, dass** im Bereich des Getriebeeingangs (7) zumindest ein Teil eines getriebeeingangsseitig anliegenden Drehmomentes in Richtung wenigstens einer mit einem Nebenabtrieb koppelbaren weiteren Welle (15, 17) abzweigbar ist.

10. Getriebevorrichtung nach einem der Ansprüche 1 bis 9, **dadurch gekennzeichnet, dass** die Pumpe (12) und der Motor (13) in Einbaulage der Getriebevorrichtung (1) in einem Fahrzeug an den vorhandenen Bauraum angepasst zueinander positioniert sind.

11. Getriebevorrichtung nach einem der Ansprüche 1 bis 10, **dadurch gekennzeichnet, dass** die Pumpe (12) und der Motor (13) in Einbaulage der Getriebevorrichtung (1) in einem Fahrzeug in Fahrzeughochrichtung übereinander oder in Fahrzeuglängs- oder Fahrzeugquerrichtung im Wesentlichen nebeneinander angeordnet sind.

12. Getriebevorrichtung nach einem der Ansprüche 1 bis 11, **dadurch gekennzeichnet, dass** die Fahrtrichtungsschaltelemente (KV, KR) als reibschlüssige Lastschaltelemente ausgebildet sind.

## Claims

1. Transmission apparatus (1) having a secondarily coupled power split system, it being possible for a part of a prevailing torque to be conducted in a first power branch (3) at least via a hydrostatic device (4) and for the other part of the torque to be conducted in a second power branch (5) via a mechanical device (6) between a transmission input (7) and a transmission output (8), the hydrostatic device (4) of the first power branch (3) comprising at least one pump (12) and at least one motor (13) which is operatively connected to it via a hydraulic circuit, which pump (12) and motor (13) can both be adjusted, it being possible for the two power branches (3, 5) to be summarized via a summarizing transmission (9), the summarizing transmission (9) being configured as a planetary transmission device with three shafts (22, 23, 24), a first shaft (23) of the planetary transmission device (9) being operatively connected to the transmission input (7), a second shaft (22) of the planetary transmission device (9) being operatively connected to the pump (12), and a third shaft (24) of the planetary transmission device (9) being operatively connected to the motor (13) and the transmission output (8), and only one range of transmission ratios being provided, within which a transmission ratio can be varied in an infinitely variable manner via the hydrostatic device (4), **characterized in that** the maximum delivery volume of the pump (12) is of smaller magnitude than the maximum displacement of the motor (13), and the pump (12) and the motor (13) can be adjusted jointly via a yoke (14) .

2. Transmission apparatus according to Claim 1, **characterized in that** at least two driving direction switching elements (KR, KV) are provided between the transmission input (7) and the summarizing transmission (9), by means of which driving direction switching elements (KR, KV) a switchover can be carried out between a mode for forward driving and a mode for reverse driving.

3. Transmission apparatus according to Claim 1, **characterized in that** at least two driving direction switching elements are provided between a transmission output and the summarizing transmission, by means of which driving direction switching elements a switchover can be carried out between a mode for forward driving and a mode for reverse driving.

4. Transmission apparatus according to Claim 1, **characterized in that** the first shaft (23) of the planetary transmission device (9) is a planetary carrier, the second shaft (22) of the planetary transmission device (9) is a sun gear, and the third shaft (24) of the planetary transmission device (9) is an internal gear.

5. Transmission apparatus according to one of Claims 1 to 4, **characterized in that** a displacement of the motor (13) and a delivery volume of the pump (12) can be varied in a range of from 0% to 100%, the prevailing torque being conducted completely via the first power branch (3) which has the hydrostatic device (4) in the case of a maximum displacement of the motor (13) and a minimum delivery volume of the pump (12), and being conducted completely via the second power branch (5) which has the mechanical device (6) in the case of a minimum displacement of the motor (13) and a maximum delivery volume of the pump (12).

6. Transmission apparatus according to one of Claims 1 to 5, **characterized in that** the hydrostatic device (4) and the transmission input (7) are arranged on the same side of the summarizing transmission (9).

7. Transmission apparatus according to one of Claims 1 to 6, **characterized in that** the hydrostatic device (4) is arranged on one side of the summarizing transmission (9) and the transmission input (7) is arranged on the other side of the summarizing transmission (9).

8. Transmission apparatus according to one of Claims 1 to 7, **characterized in that** the transmission output (8) is provided at least in the region of a shaft (30) which can be operatively connected and/or is operatively connected to an output shaft (16) of the motor (13).

9. Transmission apparatus according to one of Claims 1 to 8, **characterized in that**, in the region of the transmission input (7), at least one part of a torque which prevails on the transmission input side can be branched off in the direction of at least one further shaft (15, 17) which can be coupled to a power take-off.

10. Transmission apparatus according to one of Claims 1 to 9, **characterized in that**, in the installed position of the transmission apparatus (1) in a vehicle, the pump (12) and the motor (13) are positioned with respect to one another in a manner which is adapted to the existing installation space.

11. Transmission apparatus according to one of Claims 1 to 10, **characterized in that**, in the installed position of the transmission apparatus (1) in a vehicle, the pump (12) and the motor (13) are arranged above one another in the vehicle vertical direction or substantially next to one another in the vehicle longitudinal or vehicle transverse direction.

12. Transmission apparatus according to one of Claims 1 to 11, **characterized in that** the driving direction switching elements (KV, KR) are configured as frictionally locking power-shift elements.

## Revendications

1. Arrangement de boîte de transmission (1) comprenant un répartiteur de puissance accouplé du côté secondaire, une partie d'un couple appliqué pouvant être amené dans une première branche de puissance (3) au moins par le biais d'un dispositif hydrostatique (4) et l'autre partie du couple dans une deuxième branche de puissance (5) par le biais d'un dispositif mécanique (6) entre une entrée de boîte de transmission (7) et une sortie de boîte de transmission (8), le dispositif hydrostatique (4) de la première branche de puissance (3) comprenant au moins une pompe (12) et au moins un moteur (13) en liaison fonctionnelle avec celle-ci par le biais d'un circuit hydraulique, lesquels sont tous deux positionnables, les deux branches de puissance (3, 5) pouvant être additionnées par le biais d'un engrenage additionneur (9), l'engrenage additionneur (9) étant réalisé sous la forme d'un dispositif d'engrenage planétaire avec trois arbres (22, 23, 24), un premier arbre (23) du dispositif d'engrenage planétaire (9) se trouvant en liaison fonctionnelle avec l'entrée de boîte de transmission (7), un deuxième arbre (22) du dispositif d'engrenage planétaire (9) avec la pompe (12) et un troisième arbre (24) du dispositif d'engrenage planétaire (9) avec le moteur (13) et la sortie de boîte de transmission (8), et une seule plage de démultiplication étant présente, à l'intérieur de laquelle un rapport de démultiplication peut être varié en continu par le biais du dispositif hydrostatique (4),
**caractérisé en ce que**
le volume refoulé maximal de la pompe (12) est dimensionné plus petit que le volume absorbé maximal du moteur (13) et la pompe (12) et le moteur (13) peuvent être positionnés ensemble par le biais d'un étrier (14).

2. Arrangement de boîte de transmission selon la revendication 1, **caractérisé en ce qu'**au moins deux éléments de commutation du sens de la marche (KR, KV) se trouvent entre l'entrée de boîte de transmission (7) et l'engrenage additionneur (9), lesquels permettent de permuter entre un mode pour la marche avant et un mode pour la marche arrière.

3. Arrangement de boîte de transmission selon la revendication 1, **caractérisé en ce qu'**au moins deux éléments de commutation du sens de la marche se trouvent entre une sortie de boîte de transmission et l'engrenage additionneur, lesquels permettent de permuter entre un mode pour la marche avant et un mode pour la marche arrière.

4. Arrangement de boîte de transmission selon la revendication 1, **caractérisé en ce que** le premier arbre (23) du dispositif d'engrenage planétaire (9) est un porte-satellites, le deuxième arbre (22) du dispositif d'engrenage planétaire (9) une roue solaire et le troisième arbre (24) du dispositif d'engrenage planétaire (9) une couronne à denture intérieure.

5. Arrangement de boîte de transmission selon l'une des revendications 1 à 4, **caractérisé en ce qu'**un volume absorbé du moteur (13) et un volume refoulé de la pompe (12) peuvent varier dans une plage de 0 % à 100 %, le couple appliqué au volume absorbé maximal du moteur (13) et au volume refoulé minimal de la pompe (12) étant acheminé entièrement par le biais de la première branche de puissance (3) qui possède le dispositif hydrostatique (4), et au volume absorbé minimal du moteur (13) et au volume refoulé maximal de la pompe (12) entièrement par le biais de la deuxième branche de puissance (5) qui possède le dispositif mécanique (6).

6. Arrangement de boîte de transmission selon l'une des revendications 1 à 5, **caractérisé en ce que** le dispositif hydrostatique (4) et l'entrée de boîte de transmission (7) sont disposés du même côté de l'engrenage additionneur (9).

7. Arrangement de boîte de transmission selon l'une des revendications 1 à 6, **caractérisé en ce que** le dispositif hydrostatique (4) est disposé d'un côté de l'engrenage additionneur (9) et l'entrée de boîte de transmission (7) de l'autre côté de l'engrenage additionneur (9).

8. Arrangement de boîte de transmission selon l'une des revendications 1 à 7, **caractérisé en ce que** la sortie de boîte de transmission (8) se trouve au moins dans la zone d'un arbre (30) qui peut être amené en liaison fonctionnelle et/ou qui se trouve en liaison fonctionnelle avec un arbre de sortie (16) du moteur (13) .

9. Arrangement de boîte de transmission selon l'une des revendications 1 à 8, **caractérisé en ce que** dans la zone de l'entrée de boîte de transmission (7), au moins une partie d'un couple appliqué du côté de l'entrée de boîte de transmission peut être dérivée en direction d'au moins un arbre (15, 17) supplémentaire pouvant être accouplé à une prise de force auxiliaire.

10. Arrangement de boîte de transmission selon l'une des revendications 1 à 9, **caractérisé en ce que** la pompe (12) et le moteur (13), dans la position d'installation de l'arrangement de boîte de transmission (1) dans un véhicule, sont positionnés l'un par rapport à l'autre de manière adaptée à l'espace de montage existant.

11. Arrangement de boîte de transmission selon l'une des revendications 1 à 10, **caractérisé en ce que** la pompe (12) et le moteur (13), dans la position d'installation de l'arrangement de boîte de transmission (1) dans un véhicule, sont disposés l'un au-dessus de l'autre dans le sens de la hauteur du véhicule ou sensiblement l'un à côté de l'autre dans le sens longitudinal du véhicule ou transversal du véhicule.

12. Arrangement de boîte de transmission selon l'une des revendications 1 à 11, **caractérisé en ce que** les éléments de commutation du sens de la marche (KR, KV) sont réalisés sous la forme d'éléments de commutation de charge coopérant par friction.
